# EUROPÄISCHE PATENTSCHRIFT

(11) **EP 0 808 266 B1**
(45) Veröffentlichungstag und Bekanntmachung des Hinweises auf die Patenterteilung: **30.09.1998**
(21) Anmeldenummer: 96902279.7
(22) Anmeldetag: 16.02.1996
(51) Int. Cl.: B62D 5/083

(54) **DREHSCHIEBER-LENKVENTIL**
ROTARY STEERING VALVE
SOUPAPE DE BRAQUAGE A TIROIR ROTATIF

(30) Priorität: 17.02.1995 DE 19505384; 20.05.1995 DE 19518637
(43) Veröffentlichungstag der Anmeldung: 26.11.1997
(73) Patentinhaber: TRW Fahrwerksysteme GmbH & Co. KG, 40547 Düsseldorf (DE)
(72) Erfinder: PFEIFER, Arnd, D-47877 Willich (DE)
(74) Vertreter: Stenger, Watzke & Ring Patentanwälte
(86) Internationale Anmeldenummer: EP9600664
(87) Internationale Veröffentlichungsnummer: WO9625318

(56) Entgegenhaltungen:
- EP-A- 0 021 970
- EP-A- 0 145 546
- EP-A- 0 181 797
- WO-A-94/00329
- DE-A- 4 209 647
- DE-B- 1 101 187
- FR-A- 2 084 141
- FR-A- 2 426 818
- FR-A- 2 500 397
- PATENT ABSTRACTS OF JAPAN vol. 001, no. 074 (M-026), 16.Juli 1977 & JP,A,52 020530 (TOYODA MACH WORKS LTD), 16.Februar 1977,

## Beschreibung

Die Erfindung betrifft ein Drehschieber-Lenkventil zur Versorgung eines Stellgliedes mit Hydraulikdruck, bestehend aus einer Eingangswelle, einer Ausgangswelle, einem zentrierenden Federelement und einem Ventilelement, wobei das Ventilelement aus wenigstens zwei relativ zueinander verdrehbaren Elementen besteht, die einander zugeordnete Steuerbohrungen für Hydraulikmittelzulauf, Hydraulikmittelrücklauf und die Hydraulikmittelzuführung bzw. -rückführung zu beiden Seiten des Stellgliedes aufweisen.

Lenkventile der gattungsgemäßen Art werden insbesondere in Servolenk-Systemen eingesetzt. Der Aufbau derartiger Servolenk-Systeme ist an sich bekannt. Eine mit einer Lenkstange verbundene Eingangswelle ist über ein zentrierendes Federelement mit einer mit einem Ritzel versehenen Ausgangswelle verbunden. Das Ritzel wirkt auf die Zahnstange einer Lenkung. Für derartige Lenksysteme ist die Verwendung von Lenkventilen bekannt. Dazu ist in bekannter Weise ein Drehschieber-Ventilelement vorgesehen, welches bei relativer Verdrehung der Eingangswelle zur Ausgangswelle in Bohrungen endende Hydraulikführungen miteinander verbindet bzw. voneinander trennt. Von einer Pumpe wird Hydraulikflüssigkeit unter Druck durch das System gepumpt. Bei einer relativen Verdrehung der Eingangswelle zur Ausgangswelle wird Hydraulikdruck einem Hydraulikmotor zugeführt, welcher die Zahnstangenbewegung in eine der beiden möglichen Richtungen unterstützt.

Die Aktivierung derartiger Lenkventile erfolgt durch das Verdrehen der Eingangswelle gegenüber der Ausgangswelle, wobei durch das dazwischen angeordnete zentrierende Federelement, beispielsweise einen Torsionsstab, ein Torsionsmoment überwunden werden muß.

Bei einem Typ von Lenkventilen ist in bekannter Weise eine Ventilhülse vorgesehen, welche mit der Ausgangswelle in Eingriff steht und die Eingangswelle umgibt. Diese Ventilhülse weist Steuernuten auf, die mit von außerhalb eines Gehäuses hindurchgeführten Bohrungen für die Hydraulikmittelführung zur Steuerung in Deckung bringbar sind.

Beispielsweise ist ein derartiges Drehschieber-Lenkventil aus der DE-OS 42 09 647 bekannt, wobei eine mit der Eingangswelle verbundene Hülse von einer mit der Ausgangswelle verbundenen Ventilhülse umgeben ist und übergriffen wird, so daß beide Hülsen sich im Bereich von zueinanderliegenden Ringflächen überdecken. Im Bereich dieser Ringflächen sind in beiden Hülsen Bohrungen angeordnet, die ihrerseits mit Hydraulikmittelleitungen verbunden sind. Durch die jeweilige relative Verdrehposition können die Bohrungen miteinander in Deckung gebracht werden oder voneinander getrennt werden, was zu einer Verbindung oder Trennung der entsprechenden Leitungen führt. Auf diese Weise ist eine Servosteuerung möglich. Entsprechende Drehschieber-Lenkventile sind aus der DE-OS 28 33 009 und der DE-PS 42 32 570 bekannt.

Ein anderer Typ von Drehschieber-Lenkventilen ist aus zum Beispiel FR-A-2 500 397 bekannt, wobei im wesentlichen axial liegende Bohrungen miteinander in Deckung gebracht werden.

Ein Servolenkventil nach dem Oberbegriff des Anspruchs 1 ist aus der DE 1 101 187 A1 bekannt, wobei die Hydraulikdruckmittel zunächst über eine Ventilhülse in entsprechende Nuten der Eingangswelle geführt werden. Durch die relative Verdrehung von Eingangswelle zu Ausgangswelle wird eine im Stirnflächenbereich mündende Ausgangsleitung entweder mit einer Druckleitung oder einer Entlastungsleitung verbunden.

Die vorbekannten Drehschieber-Lenkventile benötigen eine Vielzahl zusätzlicher Bauteile, um das Drehschieber-Ventilelement auszubilden. Dadurch wird auch die Baugröße des Lenkventils unerwünscht groß und die Herstellung ist mit einem großen wirtschaftlichen Aufwand verbunden. Aufgrund der immer noch verwendeten Ventilhülsen ist die Druckmittelführung zu den Ringflächen problematisch, so daß häufig mehrfach miteinander kombinierte Bohrungen ausgeführt werden müssen, die auch durch schräg verlaufende Kanäle miteinander verbunden sein können. Da bei einem Ventil mit einer Steuerhülse grundsätzlich eine Mindesttoleranz vorgesehen werden muß, da sich die Hülse während des Betriebs unter dem Hydraulikmitteldruck deformiert, was zu einer erhöhten Reibung führen kann, sind die vorbekannten Drehschieberventile auch in der Herstellung aufwendig. Bei der Montage ist die Einstellung der relativ zueinander beweglichen Elemente ebenfalls mit großem Aufwand verbunden, insbesondere, weil beim Einsatz der Ventilhülse eine entsprechende hydraulische Abdichtung erfolgen muß.

Schließlich sind bei den vorbekannten Drehschieberventilen mit Ringscheibe an den Ringflächen die Steuerkanten durch Bohrungen oder elliptische Ausbildungen realisiert, die auf Kreisbögen liegen. Dadurch kommt es bei einer relativen Verdrehung der Ringflächen stets zu einer veränderlichen Überdeckung der sich gegenüberliegenden kreisförmigen Bohrungen, die zunächst minimal ist und mit zunehmender Verdrehung immer größer wird. Die zunächst geringfügige Überdeckung der Steuerkanten führt bekanntermaßen zu lauten Strömungsgeräuschen, die von Bedienpersonen häufig als nachteilig empfunden werden.

Unabhängig davon, ob das Ventilelement durch eine Ventilhülse oder in anderer Weise ausgebildet ist, weisen die vorbekannten Ventilelemente den Nachteil auf, daß die Ansteuerungscharakteristika nicht variabel sind. Die Steuerkennlinien lassen sich somit bei einem einmal hergestellten Ventil nicht variieren, insbesondere nicht in Abhängigkeit von Funktionsparametern. Ein weiteres Problem herkömmlicher Drehschieber-Lenkventile besteht darin, daß ein automatisches Steuern eines Fahrzeuges nur mit großem Bauteil- und Steuerungsaufwand realisierbar ist.

Davon ausgehend liegt der vorliegenden Erfindung die **Aufgabe** zugrunde, ein Drehschieber-Lenkventil der gattungsgemäßen Art dahingehend zu verbessern, daß dieses mit wenig Bauelementen und geringem wirtschaftlichen Aufwand in kompakter Bauweise herstellbar ist. Darüber hinaus sollen die Anforderungen an die erforderlichen Toleranzen möglichst verringert werden und die Strömungsgeräuschentwicklung reduzierbar sein.

Zur technischen **Lösung** dieser Aufgabe wird ein gattungsgemäßes Lenkventil dadurch weitergebildet, daß sämtliche einander zugeordneten Steuerbohrungen des Ventilelementes ausschließlich im Bereich sich gegenüberliegender Stirnflächen der Eingangswelle und der Ausgangswelle ausgebildet und direkt mit gehäuseseitigen Druckmittelanschlüssen in Verbindung sind.

Durch die erfindungsgemäße Ausgestaltung ist es nurmehr erforderlich, an der Eingangs- und der Ausgangswelle sich gegenüberliegende Stirnflächen auszubilden, so daß das Drehschieber-Ventilelement gebildet werden kann. Es entfallen die zusätzlichen Bauelemente und die Baugröße kann zwangsläufig reduziert werden. Im Sinne der vorliegenden Erfindung bedeutet die direkte Verbindung der Steuerbohrungen mit gehäuseseitigen Druckmittelanschlüssen, daß vollständig auf druckmittelzuleitende oder -verteilende Ventilhülsen und dergleichen verzichtet wird. Über die gehäuseseitigen Druckmittelanschlüsse wird Druckmittel zugeführt und über in den Wellen ausgebildete Bohrungen, Nuten und dergleichen zu den ausschließlich im Bereich der sich gegenüberliegenden Stirnflächen der Eingangswelle und der Ausgangswelle ausgebildeten Steuerbohrungen zugeleitet bzw. von diesen über entsprechende Bohrungen, Nuten und dergleichen in den Wellen zu gehäuseseitigen Druckmittelanschlüssen geführt. Dabei versteht es sich von selbst, daß im Bereich der Wellen zusätzliche, druckmittelhinduchleitende Elemente eingesetzt werden können, die jedoch für sich genommen keine die hydraulische Steuerung an sich beeinflussende Funktion übernehmen, selbst wenn diese das geführte Druckmittel für andere Zwecke nutzbar machen. Wesentlich ist, daß von den gehäuseseitigen Anschlüssen zu dem im Stirnflächenbereich der Wellen ausgebildeten Ventilelement eine hydraulische Direktverbindung besteht.

Die sich gegenüberliegenden Stirnflächen werden in scheibenförmigen Erweiterungen der Eingangs- und der Ausgangswelle ausgebildet. Diese scheibenartigen Erweiterungen oder zylinderförmigen Endstücke bilden eine ausreichend große Stirnfläche, so daß die erforderlichen Steuerkanten untergebracht werden können. Es werden in die beiden Stirnflächen zur Steuerkantenausbildung Axialbohrungen angeordnet, die gemäß einem besonders vorteilhaften Vorschlag der Erfindung mit Hydraulikleitungen bildenden Axialbohrungen verbunden sind. Durch die scheibenförmige Erweiterung können diese Axialbohrungen direkt in axialer Verlängerung an Zuführleitungen angeschlossen werden, so daß die Druckmittelführung besonders vereinfacht ist.

Weiterhin wird vorgeschlagen, stirnflächenseitig sogenannte Steuersenken auszubilden, in deren Bereich die Steuerbohrungen liegen. Durch die Steuersenken können Steuerkantenvergrößerungen erzeugt werden. In besonders vorteilhafter Weise wird vorgeschlagen, daß die Steuersenken im wesentlichen radial verlaufende gerade Kanten aufweisen. In vorteilhafter Weise sind die Kanten nebeneinanderliegender Steuersenken zueinander im wesentlichen parallel. Diese erfindungsgemäße Ausbildung hat den besonderen Vorteil, daß bei einer relativen Verdrehung der Stirnflächen zueinander die im wesentlichen geraden Kanten der Steuersenken in Überdeckung kommen, so daß von Anfang an sehr große Überdeckungen erzielt werden. Dies führt zwangsläufig zu einer erheblichen Strömungsgeräuschverminderung.

Ein besonderer Vorteil des erfindungsgemäßen Drehschieber-Lenkventils, das als Axialstromventil ausgebildet ist, ist die kompakte Bauform und die reduzierte Anzahl der Komponenten. Gegenüber herkömmlichen Drehschieber-Lenkventilen wird keine Ventilhülse benötigt. So ist es beispielsweise möglich, die zur Steuerung benötigten Nuten an der Eingangs- und der Ausgangswelle kaltumformend herzustellen. Aufgrund der erfindungsgemäßen Ausbildung können die Toleranzen zwischen den beiden Ventilkomponenten erheblich verringert werden, da keine Hülsendeformation stattfinden kann. Demgegenüber wirkt eine Druckerhöhung beim erfindungsgemäßen Drehschieber-Ventil eher reibungsmindernd.

In vorteilhafter Weise wird vorgeschlagen, daß der relative Drehwinkel, um den das Ventil ausgelenkt werden kann, durch eine formschlüssige Kontur zwischen der Eingangs- und Ausgangswelle begrenzt wird. So können elliptische oder eckige Verbindungsbereiche zwischen Eingangs- und Ausgangswelle ausgebildet werden, wobei die Aufnahmeöffnungen größer sind als die eingesetzten Zapfen, so daß sich eine definierte Drehwinkelbegrenzung ergibt.

Das erfindungsgemäße Drehschieber-Lenkventil läßt sich darüber hinaus in unterschiedlichen Versionen ausbilden. So kann beispielsweise zwischen den Stirnflächen eine ein Zentriermoment ausübende Vorrichtung ausgebildet sein. Beispielsweise können federbelastete Kugeln zwischen die Stirnflächen in entsprechende Bohrungen der Eingangs- bzw. Ausgangswelle eingesetzt werden, die in Nuten der jeweils anderen Welle eingreifen. In Abhängigkeit vom Verdrehwinkel wird die durch die federbelasteten Kugeln erzeugte Axialkraft stärker und das Zentriermoment größer. In besonders vorteilhafter Weise wird vorgeschlagen, diese Zentriermomentverstärkung einstellbar auszugestalten.

Das erfindungsgemäße Lenkventil führt zu einer erheblichen Bauteileverringerung und einer kompakten Baugröße, wobei vor allem keine Ventilhülse mehr eingesetzt werden muß. Die Druckmittelführung wird erheblich erleichtert und kann auf axiale Führungselemente reduziert werden. Die Grundeinstellung des Ventils ist sehr stark vereinfacht und die Toleranzen können gegenüber herkömmlichen Drehschieber-Ventilen verringert werden. Schließlich können Maßnahmen zur Geräuschverringerung in wirksamer Weise eingesetzt werden.

Gemäß einer besonders vorteilhaften Ausgestaltung der Erfindung wird, um bei einem Drehschieber-Lenkventil der erfindungsgemäßen Art eine Variation der Ansteuerungscharakteristika zu ermöglichen und ein automatisches Steuern des Fahrzeugs zu erleichtern, vorgeschlagen, daß zwischen den beiden das Ventilelement bildenden Stirnflächenbereichen wenigstens ein Steuerbohrungen aufweisendes Zwischenglied angeordnet ist. Durch diese erfindungsgemäße Ausgestaltung wird ein Drehschieber-Lenkventil bereitgestellt, welches im Steuerbohrungs-/Steuernutenübergangsbereich durch die Anordnung eines Zwischengliedes variierbar ist.

Im Falle, daß das Ventilelement durch in Axialrichtung gegenüberliegenden und in Stirnflächen relativ zueinander verdrehbarer Bereiche angeordnete Bohrungen gebildet ist, kann ein entsprechendes Zwischenglied gemäß einem besonders vorteilhaften Vorschlag der Erfindung in Form einer Scheibe dazwischengesetzt werden. Gemäß einem Vorschlag der Erfindung sind die Steuerbohrungen in dem Zwischenglied an den Oberflächen mit unterschiedlichen Steuernuten versehen. Durch diese Maßnahme kann eine Steuerbohrung an beiden Oberflächenbereichen mit einer unterschiedlichen Steuernut versehen werden. Daraus ergibt sich ein unterschiedliches Ansprechverhalten, je nachdem, welche Steuernut aktiv ist.

Gemäß einem besonders vorteilhaften Vorschlag der Erfindung ist das Zwischenglied mit wenigstens einem der das Ventilelement bildenden Bereich verbindbar. Im Falle einer Zwischenscheibe ist dies entweder die Eingangswelle oder die Ausgangswelle. In vorteilhafter Weise erfolgt die Verbindung in Abhängigkeit von Funktionsparametern. Hierzu kann beispielsweise ein mechanischer Aktuator oder ein entsprechendes Mittel eingesetzt werden. Auch sind elektrorheologische Medien, Reibung, Magnetismus und dergleichen einsetzbar. Wesentlich ist, daß in Abhängigkeit von Funktionsparametern, beispielsweise Fahrzeuggeschwindigkeit, Hydraulikdruck und/oder dergleichen, das Zwischenglied jeweils mit dem einem oder mit dem anderen das Ventilelement bildenden Bereich verbunden wird. Somit kann die jeweils an der freien Oberfläche ausgebildete Steuernut aktiviert werden, so daß sich das gewünschte Ansprechverhalten einstellen läßt. Beispielsweise kann also eine Zwischenscheibe oder eine Zwischenhülse beim Parkieren fest mit der Eingangswelle, bei Hochgeschwindigkeit mit der Ausgangswelle verbunden werden. Somit ergibt sich für den Hochgeschwindigkeitsbereich eine andere Kennlinie als im Parkierbereich. Zur Justierung kann das Zwischenglied in vorteilhafter Weise mit einem Einstellelement, vorzugsweise einem Einstellring versehen sein. Gemäß einem weiteren Vorteil der Erfindung ist das Zwischenglied antreibbar. Zum Antreiben wird beispielsweise ein Stellmotor verwendet. Durch diese Möglichkeit ist eine einfache Realisierung einer automatischen Steuerung möglich. Dadurch, daß das Zwischenglied relativ zu den die Steuerbohrungen und/oder Steuernuten aufweisenden Bereichen durch ein Stellglied bewegbar ist, wird eine automatische Steuerung herbeigeführt.

Anstelle eines Zwischengliedes kann gemäß einem Vorschlag der Erfindung auch eine Vielzahl von Zwischengliedern verwendet werden. Hierdurch ist eine besonders feine Abstimmung und Kennlinienvariation und/oder automatische Steuerungsrealisierung möglich.

Mit der Erfindung wird ein Drehschieber-Lenkventil bereitgestellt, welches in höchstem Maß an die Anforderungen einer Steuerung anpaßbar ist und darüber hinaus auf einfachste Weise die Realisation einer automatischen Steuerung gewährleistet.

Durch die Verwendung eines Zwischengliedes mit an den jeweiligen Oberflächen unterschiedlichen Steuernuten bzw. Steuerkantenverläufen läßt sich ein unterschiedliches Ansprechverhalten des Drehschieber-Lenkventils erreichen, je nachdem, welche der Oberflächen als freie Oberfläche gegenüber dem jeweils anderen Ventilelementbereich verdrehbar gehalten wird.

Die Grundeinstellung des Ventils ist sehr stark vereinfacht und die Toleranzen können gegenüber herkömmlichen Drehschieber-Ventilen verringert werden. Schließlich können Maßnahmen zur Geräuschverringerung in wirksamer Weise eingesetzt werden.

Weitere Vorteile und Merkmale der Erfindung ergeben sich aus der folgenden Beschreibung anhand der Figuren. Dabei zeigen:

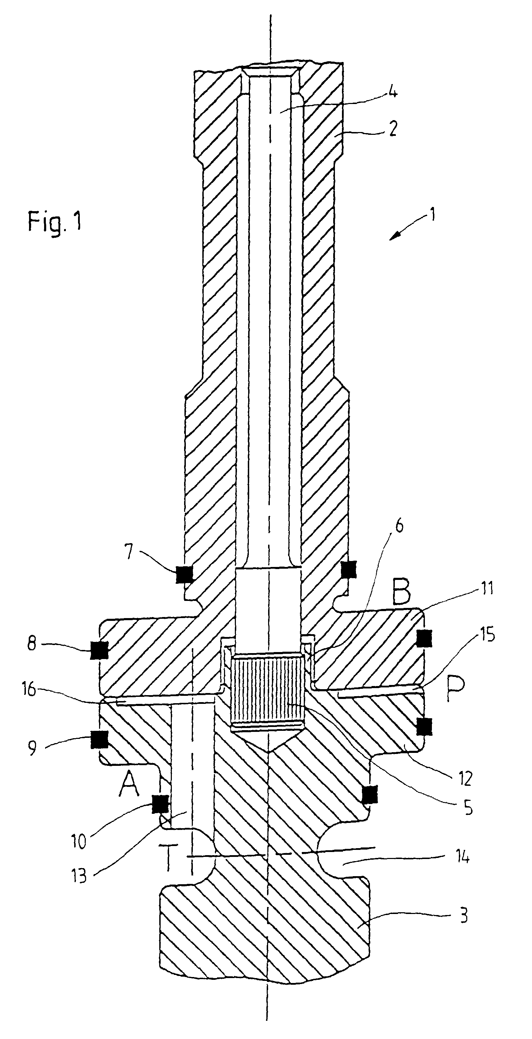

- Figur 1: eine schematische, teilgeschnittene Darstellung eines Lenkventils;

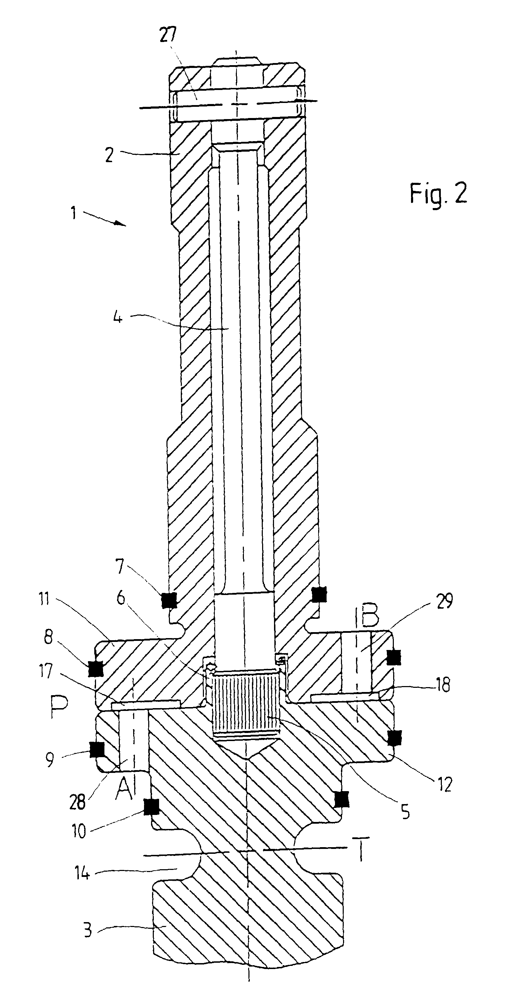

- Figur 2: eine Darstellung gemäß Figur 1 in einer anderen radialen Position;
- Figur 3: eine schematische Darstellung des Drehschieber-Ventilbereiches in Neutralstellung;
- Figur 4: eine Darstellung gemäß Figur 3 in einer verdrehten Position;
- Figur 5: eine Darstellung gemäß Figur 3 in einer anderen verdrehten Position;
- Figur 6: eine Teildarstellung im Bereich der scheibenförmigen Erweiterungen eines Ausführungsbeispiels der Erfindung;
- Figur 7: eine Darstellung gemäß Figur 3 eines weiteren Ausführungsbeispiels der Erfindung;
- Figur 8: eine Darstellung einer Zwischenscheibe und
- Figur 9: eine schematische Darstellung eines Drehschieber-Ventilbereiches mit Zwischenscheibenverwendung.

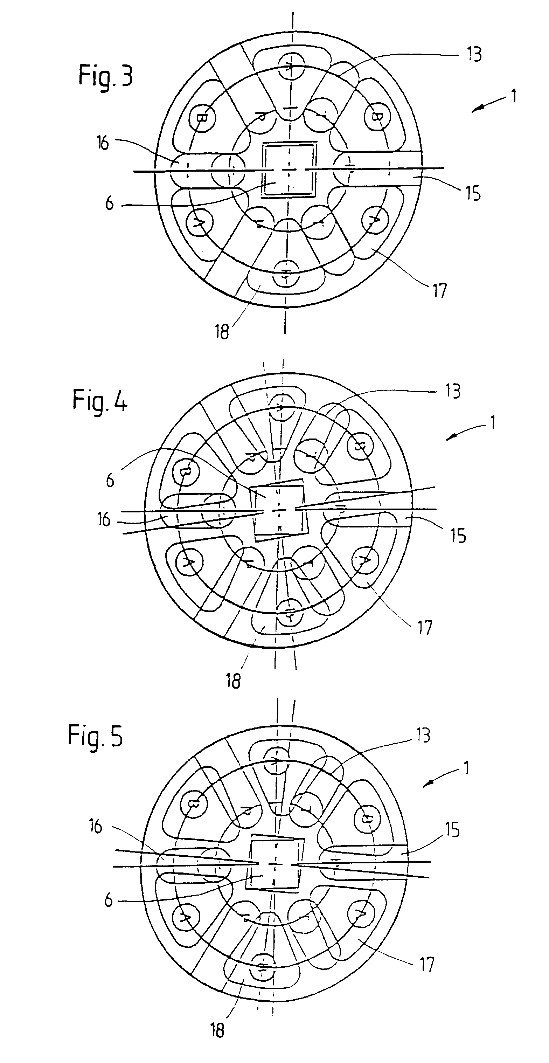

Das in den Figuren gezeigte Lenkventil 1 umfaßt eine Eingangswelle 2, eine Ausgangswelle 3 und im gezeigten Ausführungsbeispiel als zentrierendes Federelement einen Torsionsstab 4. Der Torsionsstab 4 ist an einem Ende mit der Eingangswelle verbunden, am anderen Ende an der Ausgangswelle befestigt. Die Befestigung 5 zwischen Torsionsstab und Ausgangswelle ist durch eine Rändelung verdrehsicher ausgestaltet. Die Ausgangswelle ragt mit einem zentralen Zapfen in eine entsprechende Bohrung der Eingangswelle. Dieser Zapfen ist, wie in den Figuren 3 bis 5 gezeigt, quadratisch ausgeführt, während die Bohrung oder Ausnehmung in der Eingangswelle ebenfalls quadratisch ausgebildet ist, jedoch mit einer größeren Kantenlänge. Somit kann bis zum Anschlag eine Verdrehung zwischen den beiden Wellen erfolgen.

Um den Bereich des Drehschieber-Ventilelementes sind Dichtungen 7, 8, 9 und 10 ausgebildet. Die Eingangswelle ist mit einer nicht gezeigten Lenkung verbunden, während die Ausgangswelle mit einem nicht gezeigten Ritzel versehen ist, welches beispielsweise mit der Zahnstange einer Lenkung im Eingriff ist.

In dem Bereich, an dem sich die Eingangswelle 2 und die Ausgangswelle 3 mit ihren Stirnflächen gegenüber liegen, weisen beide im wesentlichen deckungsgleiche scheibenförmige Erweiterungen aus, die beide im Stirnflächenbereich Nuten 15, 16, 17, 18 aufweisen, die die Steuernuten bilden. Diese Nuten sind mittels Axialbohrungen 13, 28, 29 mit entsprechenden Druckführungsleitungen verbunden.

Mit P ist der Druckzuführungsbereich bezeichnet, der im gezeigten Ausführungsbeispiel dem Ringraum im Stirnflächenbereich zugeordnet ist. Ein nicht gezeigtes Gehäuse weist an dieser Stelle eine Druckzuführleitung auf und der Druck gelangt über radial nach außen geführte Nuten in den Stirnflächenzwischenbereich. Mit T ist der Tankrücklauf bezeichnet, welcher über Axialbohrungen in der Ausgangswelle vom Stirnflächenbereich nach außen geführt ist. Hier kann das Gehäuse einen Hydraulikanschluß für die Tankrückführung aufweisen. Im gezeigten Ausführungsbeispiel weist die Ausgangswelle eine ringförmige Einschnürung auf, um für die Tankrückführbohrung einen Auslaß bereitzustellen. A und B bezeichnen die Axialbohrungen für den Druck, der den beiden Seiten eines Stellgliedes zugeführt wird. Diese sind als Axialbohrungen in den scheibenförmigen Erweiterungen ausgebildet und mit entsprechenden Steuernuten verbunden. Die Druckräume A,B,P und T sind durch die Dichtungen 7,8,9 und 10 voneinander getrennt.

Wie in den Figuren 3 bis 5 gezeigt sind die Nuten oder Steuersenken so ausgebildet, daß sie im wesentlichen radial verlaufende gerade Bereiche aufweisen. In der Figur 3 ist das Lenkventil in der Neutralstellung gezeigt. Die Steuerkanten der jeweiligen Nuten liegen nebeneinander. Gemäß Figur 4 ist eine Verdrehung der Eingangswelle nach links erfolgt, so daß die Steuersenken bzw. -nuten der A-Seite mit den Nuten der Druckzuführung P in Überdeckung gelangt sind. Die B-Seite ist mit dem Tankrücklauf T in Überdeckung. Die Überdeckung erfolgt praktisch über die gesamte Länge der geraden Kanten der Nuten, so daß die Strömungsgeräusche weitestgehend vermieden werden.

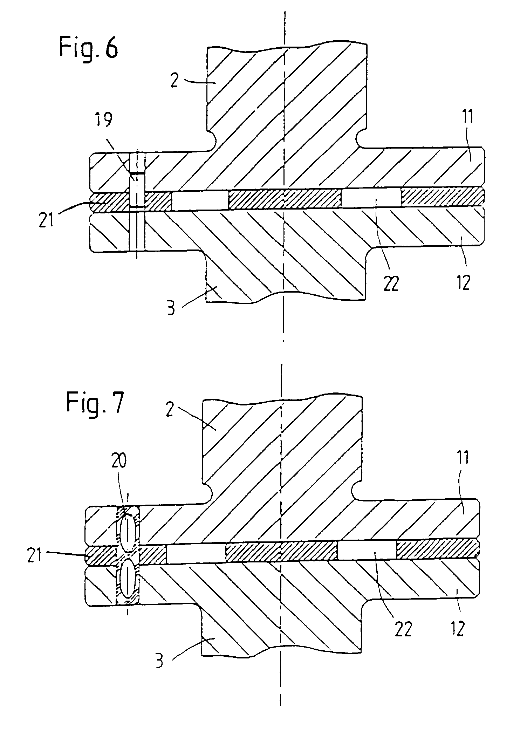

Ein Lenkausschlag in der umgekehrten Richtung ist in Figur 5 gezeigt.

Bei der Montage des gezeigten Lenkventils wird nach einem hydraulischen Zentriervorgang die Lage der Eingangswelle, der Ausgangswelle und des Torsionsstabes zueinander mit Hilfe eines Zentrierstiftes 27 fixiert, so daß in dieser Position die hydraulische Mitte eingestellt ist.

In den Figuren 6 und 7 ist eine weitere Ausführungsform der Erfindung gezeigt. Die Eingangswelle 2 und die Ausgangswelle 3 weisen die beschriebenen scheibenförmigen Erweiterungen 11, 12 auf, die mit den Axialbohrungen, den Steuernuten u.s.w. versehen sind. Zwischen beiden scheibenförmigen Erweiterungen 11, 12 ist eine Zwischenscheibe 21 eingesetzt, welche im gezeigten Ausführungsbeispiel gemäß Figur 3 mittels eines Stellstiftes, im gezeigten Ausführungsbeispiel gemäß Figur 4 mittels eines Stellelementes mit einer elektrorheologischen Flüssigkeit entweder mit der Eingangswelle 2 oder mit der Ausgangswelle 3 drehfest verbindbar ist. Der Stellstift 19 kann beispielsweise geschwindigkeitsabhängig von einem mechanischen Aktuator betätigt werden. Dies ist auch hydraulikdruckabhängig möglich. Das elektrorheologische Stellelement 20 besteht im wesentlichen aus einem Elastomer, welches Kammern beinhaltet, die mit einer elektrorheologischen Flüssigkeit gefüllt sind. Je nach Fahrzustand kann dann die eine oder die andere Kammer mit mehr oder weniger Strom beaufschlagt werden, was zu einer definierten Viskositätsänderung der Flüssigkeit führt. Auf diese Weise wird die Zwischenscheibe 21 stufenlos mit der Ein- oder Ausgangswelle verbunden. Der Übergang zwischen Parkierbereich und Hochgeschwindigkeitsbereich kann so beliebig modeliert werden. Die Zwischenscheibe 21 weist gleiche oder unterschiedliche Steuerbohrungen 22 auf, die an den Oberflächen 23, 24 mit gleichen oder voneinander unterschiediichen Steuerkanten versehen sein können.

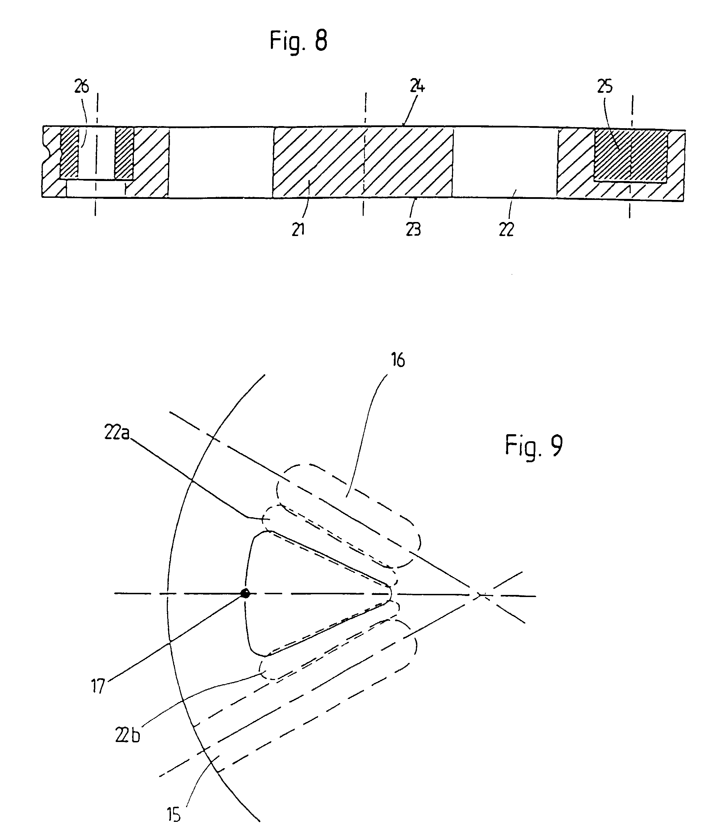

Wie in Figur 8 gezeigt, ist in die Zwischenscheibe 21 ein Einstellring 25 eingesetzt, welcher eine Bohrung 26 für den Durchgang eines Stellelementes aufweist. Durch die Relativverdrehung von Einstellring 25 und Zwischenscheibe 21 läßt sich diese relativ zur Eingangswelle 2 und zur Ausgangswelle 3 einstellen.

Ein Funktionsbeispiel ist in Figur 9 gezeigt. Die in der Ausgangswelle angeordneten Nuten 15 und 16 stehen mit entsprechenden Bohrungen in Verbindung, ebenso wie die Nut 17 in der Eingangswelle. Die Nuten versehen die jeweiligen Bohrungen mit entsprechenden Steuerkanten. Eine relative Verdrehung zwischen der Eingangswelle und der Ausgangswelle bewirkt somit, daß die Nuten mit ihren Steuerkanten in Überdeckung kommen und ein entsprechender Hydraulikmittelfluß realisierbar ist. Die in der Zwischenscheibe angeordneten Bohrungen mit den Nuten 22a und 22b können, je nachdem, mit welcher Welle die Zwischenscheibe verbunden ist, ein unterschiedliches Steuerverhalten bewirken. Mit der Eingangswelle, das heißt der Nut 17 verbunden, kommt es schon bei sehr geringen Verdrehwinkel zu einem Schließen der Steuerkanten der Nut 22a mit der Nut 16 oder der Nut 22b mit der Nut 15 und damit auch zu einer Trennung der Nut 17 von je nach Drehrichtung einer der beiden genannten Nuten. Ist die Zwischenscheibe mit der Ausgangswelle verbunden, muß ein entsprechender Verdrehwinkel überwunden werden, bis die Nut 17 mit den Nuten 22a bzw. 22b und damit einer der Nuten 15 oder 16 in Überdeckung kommt.

Die gezeigten Ausführungsbeispiele offenbaren unterschiedliche Möglichkeiten der Druckmittelführung und Ventilsteuerung, ohne auf die konkrete Ausführung beschränkt zu sein.

### Bezugszeichenliste:

- 1: Lenkventil
- 2: Eingangswelle
- 3: Ausgangswelle
- 4: Torsionsstab
- 5: Befestigung
- 6: Zapfen
- 7: Dichtung
- 8: Dichtung
- 9: Dichtung
- 10: Dichtung
- 11: scheibenförmige Erweiterung
- 12: scheibenförmige Erweiterung
- 13: Axialbohrung
- 14: Einschnürung
- 15: Nut
- 16: Nut
- 17: Nut
- 18: Nut
- 19: Stellstift
- 20: Stellement
- 21: Zwischenscheibe
- 22a: Steuernuten
- 22b: Steuernuten
- 23: Oberfläche
- 24: Oberfläche
- 25: Einstellring
- 26: Bohrung für Stellelement
- 27: Zentrierstift
- 28: Axialbohrung
- 29: Axialbohrung

## Patentansprüche

1. Drehschieber-Lenkventil (1) zur Versorgung eines Stellgliedes mit Hydraulikdruck, bestehend aus einer Eingangswelle (2), einer Ausgangswelle (3), einem zentrierenden Federelement (4) und einem Ventilelement, wobei das Ventilelement aus wenigstens zwei relativ zueinander verdrehbaren Elementen besteht, die einander zugeordnete Steuerbohrungen für Hydraulikmittelzulauf, Hydraulikmittelrücklauf und die Hydraulikmittelzuführung bzw. -rückführung zu beiden Seiten des Stellgliedes aufweisen, wobei sämtliche einander zugeordneten Steuerbohrungen des Ventilelementes ausschließlich im Bereich sich gegenüberliegender Stirnflächen der Eingangswelle (2) und der Ausgangswelle (3) ausgebildet und direkt mit gehäuseseitigen Druckmittelanschlüssen in Verbindung sind, wobei im Bereich der sich gegenüberliegenden Stirnflächen die Eingangswelle (2) und die Ausgangswelle (3) eine scheibenförmige Erweiterung (11,12) aufweisen, und wobei auf den Stirnflächen Steuersenken (15, 16, 17, 18) ausgebildet sind,
**dadurch gekennzeichnet,**
daß in den sich gegenüberliegenden Stirnflächen Axialbohrungen (13, 28, 29) ausgebildet sind.

2. Drehschieber-Lenkventil (1) nach Anspruch 1, dadurch gekennzeichnet, daß die Axialbohrungen (13, 28, 29) mit Hydraulikleitungen bildenden Bohrungen verbunden sind.

3. Drehschieber-Lenkventil (1) nach Anspruch 2, dadurch gekennzeichnet, daß die Hydraulikleitungen bildenden Bohrungen Axialbohrungen sind.

4. Drehschieber-Lenkventil nach Anspruch 1, dadurch gekennzeichnet, daß die Steuersenken (15, 16, 17, 18) im wesentlichen radial verlaufende, gerade Kanten aufweisen.

5. Drehschieber-Lenkventil nach Anspruch 4, dadurch gekennzeichnet, daß die im wesentlichen radial verlaufenden, geraden Kanten nebeneinander liegender Steuersenken (15, 16, 17, 18) im wesentlichen zueinander parallel sind.

6. Drehschieber-Lenkventil nach einem der vorhergehenden Ansprüche, dadurch gekennzeichnet, daß der relative Verdrehwinkel zwischen der Eingangswelle (2) und der Ausgangswelle (3) durch eine formschlüssige Kontur zwischen den beiden Wellen begrenzt ist.

7. Drehschieber-Lenkventil nach einem der vorhergehenden Ansprüche, dadurch gekennzeichnet, daß zwischen den sich gegenüberliegenden Stirnflächen (15, 16, 17, 18) Kugeln angeordnet sind.

8. Drehschieber-Lenkventil nach Anspruch 7, dadurch gekennzeichnet, daß die Kugeln federbelastet sind.

9. Drehschieber-Lenkventil nach einem der Ansprüche 7 oder 8, dadurch gekennzeichnet, daß die Position der Kugeln in der Stirnflächenebene einstellbar ist.

10. Drehschieber-Lenkventil nach einem der vorhergehenden Ansprüche, dadurch gekennzeichnet, daß zwischen den beiden das Ventilelement bildenden Stirnflächenbereichen wenigstens ein Steuerbohrungen (22) aufweisendes Zwischenglied (21) angeordnet ist.

11. Drehschieber-Lenkventil nach Anspruch 10, dadurch gekennzeichnet, daß die Steuerbohrungen (22) an den Oberflächen (23, 24) mit Steuernuten (22a, 22b) versehen sind.

12. Drehschieber-Lenkventil nach einem der Ansprüche 10 oder 11, dadurch gekennzeichnet, daß das Zwischenglied (21) mit wenigstens einer der Eingangs- (2) oder Ausgangswelle (3) verbindbar ist.

13. Drehschieber-Lenkventil nach Anspruch 12, dadurch gekennzeichnet, daß die Verbindung in Abhängigkeit von Funktionsparametern herstellbar ist.

14. Drehschieber-Lenkventil nach einem der Ansprüche 12 oder 13, dadurch gekennzeichnet, daß die Verbindung durch einen mechanischen Aktuator herstellbar ist.

15. Drehschieber-Lenkventil nach einem der Ansprüche 12 bis 14, dadurch gekennzeichnet, daß die Verbindung unter Einsatz eines elektrorheologischen Mediums erfolgt.

16. Drehschieber-Lenkventil nach einem der Ansprüche 10 bis 15, dadurch gekennzeichnet, daß das Zwischenglied (21) mittels eines Einstellringes einstellbar ist.

17. Drehschieber-Lenkventil nach einem der Ansprüche 10 bis 16, dadurch gekennzeichnet, daß das Zwischenglied (21) antreibbar ist.

18. Drehschieber-Lenkventil nach Anspruch 17, dadurch gekennzeichnet, daß der Antrieb durch einen Stellmotor erfolgt.

19. Drehschieber-Lenkventil nach einem der Ansprüche 10 bis 18, dadurch gekennzeichnet, daß dieses mehrere Zwischenglieder (21) aufweist.

20. Drehschieber-Lenkventil nach einem der Ansprüche 10 bis 19, dadurch gekennzeichnet, daß das Zwischenglied (21) eine mit Steuerbohrungen (22) versehene Scheibe ist.

## Claims

1. Rotary slide steering valve (1) for supplying a final control element with hydraulic pressure, comprising an input shaft (2), an output shaft (3), a centring spring element (4) and a valve element, the valve element comprising at least two elements, which are rotatable relative to one another and have control bores associated with one another for hydraulic medium admission, hydraulic medium return and the supply and/or return flow of hydraulic medium at both sides of the final control element, all of the associated control bores of the valve element being formed exclusively in the region of opposing end faces of the input shaft (2) and the output shaft (3) and being connected directly to pressure medium ports of the housing, the input shaft (2) and the output shaft (3) having a disc-shaped widening (11, 12) in the region of the opposing end faces, and control depressions (15, 16, 17, 18) being formed in the end faces,
characterized in
that axial bores (13, 28, 29) are formed in the opposing end faces.

2. Rotary slide steering valve (1) according to claim 1, characterized in that the axial bores (13, 28, 29) are connected to bores forming hydraulic lines.

3. Rotary slide steering valve (1) according to claim 2, characterized in that the bores forming hydraulic lines are axial bores.

4. Rotary slide steering valve according to claim 1, characterized in that the control depressions (15, 16, 17, 18) have substantially radially extending, straight edges.

5. Rotary slide steering valve according to claim 4, characterized in that the substantially radially extending, straight edges of adjacent control depressions (15, 16, 17, 18) are substantially parallel to one another.

6. Rotary slide steering valve according to one of the preceding claims, characterized in that the angle of relative rotation between the input shaft (2) and the output shaft (3) is delimited by a form-fit contour between the two shafts.

7. Rotary slide steering valve according to one of the preceding claims, characterized in that balls are disposed between the opposing end faces (15, 16, 17, 18).

8. Rotary slide steering valve according to claim 7, characterized in that the balls are spring-loaded.

9. Rotary slide steering valve according to one of claims 7 or 8, characterized in that the position of the balls in the end face plane is adjustable.

10. Rotary slide steering valve according to one of the preceding claims, characterized in that at least one intermediate element (21) having control bores (22) is disposed between the two end face regions forming the valve element.

11. Rotary slide steering valve according to claim 10, characterized in that the control bores (22) at the surfaces (23, 24) are provided with control grooves (22a, 22b).

12. Rotary slide steering valve according to one of claims 10 or 11, characterized in that the intermediate element (21) is connectable to at least one of the input (2) or output (2) shafts.

13. Rotary slide steering valve according to claim 12, characterized in that the connection is formable in dependence upon operating parameters.

14. Rotary slide steering valve according to one of claims 12 or 13, characterized in that the connection is formable by means of a mechanical actuator.

15. Rotary slide steering valve according to one of claims 12 to 14, characterized in that the connection is effected using an electro-rheological medium.

16. Rotary slide steering valve according to one of claims 10 to 15, characterized in that the intermediate element (21) is adjustable by means of a setting ring.

17. Rotary slide steering valve according to one of claims 10 to 16, characterized in that the intermediate element (21) is driveable.

18. Rotary slide steering valve according to claim 17, characterized in that the driving is effected by means of a servomotor.

19. Rotary slide steering valve according to one of claims 10 to 18, characterized in that it comprises a plurality of intermediate elements (21).

20. Rotary slide steering valve according to one of claims 10 to 19, characterized in that the intermediate element (21) is a disc provided with control bores (22).

## Revendications

1. Distributeur de direction à tiroir rotatif (1) pour l'alimentation d'un organe de commande en pression hydraulique, se composant d'un arbre d'entrée (2), d'un arbre de sortie (3), d'un élément élastique de centrage (4) et d'un élément de distributeur, l'élément de distributeur se composant d'au moins deux éléments rotatifs l'un par rapport à l'autre et comportant des trous de commande associés les uns aux autres pour l'arrivée de fluide hydraulique, le retour de fluide hydraulique et l'amenée ainsi que le renvoi de fluide hydraulique sur les deux côtés de l'organe de commande, tous les trous de commande de l'élément de distributeur qui sont associés les uns aux autres étant réalisés exclusivement dans la zone des surfaces extrêmes opposées de l'arbre d'entrée (2) et de l'arbre de sortie (3) et communicant directement avec des raccords de fluide hydraulique côté cage, l'arbre d'entrée (2) et l'arbre de sortie (3) comportant dans la zone des surfaces extrêmes opposées un élargissement en forme de disque (11, 12) et des creux de commande (15, 16, 17, 18) étant réalisés sur les surfaces extrêmes,
caractérisé
en ce que des trous axiaux (13, 28, 29) sont réalisés dans les surfaces extrêmes opposées.

2. Distributeur de direction à tiroir rotatif (1) selon la revendication 1, caractérisé en ce que les trous axiaux (13, 28, 29) sont raccordés à des trous formant des conduits hydrauliques.

3. Distributeur de direction à tiroir rotatif (1) selon la revendication 2, caractérisé en ce que les trous formant des conduits hydrauliques sont des trous axiaux.

4. Distributeur de direction à tiroir rotatif selon la revendication 1, caractérisé en ce que les creux de commande (15, 16, 17, 18) présentent des bords rectilignes sensiblement radiaux.

5. Distributeur de direction à tiroir rotatif selon la revendication 4, caractérisé en ce que les bords rectilignes sensiblement radiaux de creux juxtaposés de commande (15, 16, 17, 18) sont sensiblement parallèles.

6. Distributeur de direction à tiroir rotatif selon l'une des revendications précédentes, caractérisé en ce que l'angle relatif de rotation entre l'arbre d'entrée (2) et l'arbre de sortie (3) est limité par un contour à formes complémentaires entre les deux arbres.

7. Distributeur de direction à tiroir rotatif selon l'une des revendications précédentes, caractérisé en ce que des billes sont disposées entre les surfaces extrêmes opposées (15, 16, 17, 18).

8. Distributeur de direction à tiroir rotatif selon la revendication 7, caractérisé en ce que les billes sont chargées par ressort.

9. Distributeur de direction à tiroir rotatif selon l'une des revendications 7 et 8, caractérisé en ce que la position des billes est réglable dans le plan des surfaces extrêmes.

10. Distributeur de direction à tiroir rotatif selon l'une des revendications précédentes, caractérisé en ce qu'au moins un organe intermédiaire (21) comportant des trous de commande (22) est disposé entre les deux zones des surfaces extrêmes formant l'élément de distributeur.

11. Distributeur de direction à tiroir rotatif selon la revendication 10, caractérisé en ce que les trous de commande (22) comportent des rainures de commande (22a, 22b) sur les surfaces (23, 24).

12. Distributeur de direction à tiroir rotatif selon l'une des revendications 10 et 11, caractérisé en ce que l'organe intermédiaire (21) peut être relié à au moins l'un de l'arbre d'entrée (2) ou de l'arbre de sortie (3).

13. Distributeur de direction à tiroir rotatif selon la revendication 12, caractérisé en ce que la liaison peut être établie en fonction de paramètres de fonctionnement.

14. Distributeur de direction à tiroir rotatif selon l'une des revendications 12 et 13, caractérisé en ce que la liaison peut être établie par un organe mécanique d'actionnement.

15. Distributeur de direction à tiroir rotatif selon l'une des revendications 12 à 14, caractérisé en ce que la liaison s'effectue par utilisation d'un fluide électrorhéologique.

16. Distributeur de direction à tiroir rotatif selon l'une des revendications 10 à 15, caractérisé en ce que l'organe intermédiaire (21) est réglable au moyen d'une bague de réglage.

17. Distributeur de direction à tiroir rotatif selon l'une des revendications 10 à 16, caractérisé en ce que l'organe intermédiaire (21) peut être commandé.

18. Distributeur de direction à tiroir rotatif selon la revendication 17, caractérisé en ce que la commande s'effectue au moyen d'un servo-moteur.

19. Distributeur de direction à tiroir rotatif selon l'une des revendications 10 à 18, caractérisé en ce qu'il comporte plusieurs organes intermédiaires (21).

20. Distributeur de direction à tiroir rotatif selon l'une des revendications 10 à 19, caractérisé en ce que l'organe intermédiaire (21) est un disque comportant des trous de commande (22).
